(19) **Europäisches Patentamt**

**European Patent Office**

**Office européen des brevets**

(11) **EP 0 726 230 B1**

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int. Cl.$^6$: **C02F 1/66**, C02F 5/00

(21) Anmeldenummer: **96100732.5**

(22) Anmeldetag: **19.01.1996**

(54) **Verfahren zur Entsäuerung und Filtration von Wasser**

Process for the deacidification and filtration of water

Procédé pour désacidifier et filtrer l'eau

(84) Benannte Vertragsstaaten:
**AT BE CH DE DK ES FR GB IT LI LU NL SE**
Benannte Erstreckungsstaaten:
**LT LV SI**

(30) Priorität: **07.02.1995 DE 19503913**

(43) Veröffentlichungstag der Anmeldung:
**14.08.1996 Patentblatt 1996/33**

(73) Patentinhaber:
**AWA-Institut Gesellschaft für angewandte Wasserchemie mbH**
**42489 Wülfrath (DE)**

(72) Erfinder: **Kiesendahl, Kurt**
**D-40227 Düsseldorf (DE)**

(56) Entgegenhaltungen:
**EP-A- 0 383 713**          **FR-A- 2 420 363**

**Beschreibung**

Die Erfindung betrifft ein Verfahren zur Entsäuerung und Filtration von Wasser mit körnigen Materialien mit einem Massenanteil an Erdalkalikarbonat > 97 %.

Materialien auf Basis von Kalziumkarbonat, $CaCO_3$, werden als Filterschicht in offenen oder geschlossenen Filteranlagen eingesetzt. Durch Umsetzung mit der im Wasser enthaltenen Kohlensäure wird das zu behandelnde Wasser auf filtrativem Wege entsäuert. Für die Entsäuerung und Filtration von Quell-, Brunnen- und Oberflächenwasser, insbesondere Talsperrenwasser, muß das Filtermaterial aus Gründen des Gesundheitsschutzes besondere Anforderungen an die Reinheit erfüllen. Die Anforderungen sind zum Beispiel festgelegt in der DIN 2000, der Trinkwasser-Verordnung und der Zusatzstoffverkehrsverordnung. Weitere Anwendungsbereiche sind die Entsäuerung und wenn erforderlich Filtration in Verbindung mit der Enteisenung und Entmanganung, Entsäuerung und Filtration von Füllwasser für Schwimm- und Badebecken, Filtration und pH-Wert-Stabilisierung bei der Aufbereitung von Schwimm- und Badebeckenwasser sowie Aufhärtung von Destillat und Permeat für die Nutzung als Trinkwasser.

Für den Einsatz in Filteranlagen ist für einen sicheren, wartungsarmen und wirtschaftlich günstigen Betrieb auch eine stabile Kornstruktur des Materials erforderlich.

Bekannt ist, kristallines Kalziumkarbonat aus Devonvorkommen oder Juravorkommen als splittiges Material in verschiedenen Kornklassen einzusetzen. Nachteilig ist bei splittig-kristallinem Korn, daß bei glatten Kristallflächen die Reaktivität verringert ist. Für die Entsäuerung müssen daher verlängerte Kontaktzeiten berücksichtigt werden. Außerdem weisen die Kalksteinkörnungen einen unerwünschten Staubgehalt auf.

Zur Verbesserung der chemischen Reaktionsfähigkeit wird auch ein Kalziumkarbonat mit einem Anteil an Magnesiumoxid als poröses Filtermaterial eingesetzt. Es dient zur Entsäuerung von kohlensaurer, aggressiver Wässer auf filtrativem Wege. Wegen seiner hohen Reaktionsfähigkeit ist der spezifische Verbrauch besonders günstig. Der Einsatz erfolgt unter anderem in Schnellfilteranlagen zur Trinkwassergewinnung. Bei Einsatz dieses Materials in Filteranlagen können, bedingt durch Überalkalität des Wassers, Probleme durch Verbackungen der Körner auftreten.

Es ist auch versucht worden, andere Kalke in geeigneter Körnung für die Entsäuerung und Filtration von Wasser einzusetzen, zum Beispiel Korallenkalke.

Wegen der darin enthaltenen Verunreinigungen besteht aber die Gefahr, daß die Filterschüttung mikrobiologisch kontaminiert wird, so daß hygienische Probleme mit dem Trinkwasser auftreten. Abhilfe könnte durch thermische Behandlung dieser Kalke geschaffen werden (Totbrennen), was aber mit hohen Kosten verbunden ist.

Der Erfindung liegt daher die Aufgabe zugrunde, bei einem Verfahren zur Entsäuerung und Filtration von Wasser ein Filtermaterial einzusetzen, das bei stabiler Kornstruktur einen hohen Reinheitsgrad aufweist und nicht staubt, sowie zu verhindern, daß durch das Filtermaterial Fremdstoffe in das Wasser gelangen, sondern vielmehr sicherzustellen, daß auch nach der Behandlung nur Stoffe enthalten sind, die das Wasser von Natur aus mit sich bringt.

Die Aufgabe wird dadurch gelöst, daß als chemisch reagierendes Filtermaterial ein aus der mit kohlendioxidhaltigem Gas mit einem Volumenanteil an $CO_2$ > 30 % durchgeführten Rekarbonatisierung von Granalien aus Erdalkalikarbonat, Erdalkalihydroxid und Wasser erhaltenes Material eingesetzt wird. Bevorzugt werden Granalien aus Kalksteinmehl, Kalkhydrat und Wasser rekarbonatisiert.

Die Granalien haben Kugelform. Das Material läßt sich staubfrei sieben. Die Granalien weisen eine Porosität auf. Da reine Ausgangsmaterialien eingesetzt werden, weisen auch die Granalien einen hohen Reinheitsgrad auf. Das Material ist somit besonders zur Gewinnung bzw. Aufbereitung von Trinkwasser geeignet. Durch die Rekarbonatisierung des als Bindemittel zugesetzten Kalkhydrats (Kalziumhydroxid, $(Ca(OH)_2)$ weisen die Granalien eine hohe Festigkeit auf.

Die Granalien können beispielsweise auf folgende Verfahrensweise hergestellt werden:

60 Teile Kalksteinmehl und 40 Teile Weißkalkhydrat werden homogen vermischt. Die Mischung wird über eine Dosiereinrichtung einer Granuliermaschine zugeführt. Nach Zugabe von Wasser in Massenanteilen von etwa 10 bis 15 % werden Granalien hergestellt. Die Korngröße kann beliebig gewählt werden, zum Beispiel 0,5 bis 5,0 mm. Bevorzugt wird eine Kornfraktion von ca. 1 bis 3 mm.

Das kalkhydratgebundene Granulat wird in einen Trommelreaktor gegeben und durch Einleiten von auf etwa 180 °C erhitztem kohlendioxidhaltigem Gas mit einem Volumenanteil an Kohlendioxid > 30 % rekarbonatisiert. Das im kalziumhydratgebundenen Granulat vorhandene freie Kalziumoxid wird durch Kohlendioxid zu Kalziumkarbonat umgesetzt. Dabei wird das Material nach entsprechender Rekarbonatisierungszeit auf eine Temperatur von 110 °C erhitzt. Die Rekarbonatisierung wird so lange fortgesetzt, bis im Material nur noch ein Restgehalt an freiem Kalziumoxid unter 1 % vorliegt. Nach Beendigung der Reaktion wird die Charge einer Siebanlage zugeführt und auf die gewünschte Körnung abgesiebt. Das Schüttgewicht beträgt etwa 1,1 bis 1,3 $g/cm^3$.

Für das erfindungsgemäße Verfahren geeignete Granalien können zum Beispiel folgende charakteristische Werte aufweisen:

| Chemische Zusammen-setzung | Massenanteile in % |
|---|---|
| CaCO$_3$ | 97,45 % |
| Ca(OH)$_2$ | 1,22 % |
| Mg(OH)$_2$ | 0,58 % |
| Rest | 0,75 % |
| | 100,00 % |

Der Rest enthält bestimmte Metalloxide und 0,05 % unbestimmbare Anteile.

Die spezifische Oberfläche nach der BET-Methode betrug ca. 3,4 m$^2$/g, die Rohdichte ca. 2,1 cm$^3$/g. Die Prüfung der Festigkeit der einzelnen Granalien durch Belastung mit einem Gewicht bis zur Zerstörung ergab einen Wert von ca. 6,4 kg.

**Patentansprüche**

1. Verfahren zur Entsäuerung und Filtration von Wasser mit körnigen Materialien mit einem Massenanteil an Erdalkalikarbonat > 97 %, dadurch gekennzeichnet, daß als chemisch reagierendes Filtermaterial ein aus der mit kohlendioxidhaltigem Gas mit einem Volumenanteil an CO$_2$ > 30 % durchgeführten Rekarbonatisierung von Granalien aus Erdalkalikarbonat, Erdalkalihydroxid und Wasser erhaltenes Material eingesetzt wird.

2. Verfahren nach Anspruch 1, dadurch gekennzeichnet, daß die Granalien aus Kalksteinmehl, Kalkhydrat und Wasser rekarbonatisiert werden.

**Claims**

1. Process for the deacidification and filtration of water using granular materials containing a mass fraction of alkaline earth metal carbonate of >97%, characterised in that a material obtained by recarbonation of pellets of alkaline earth metal carbonate, alkaline earth metal hydroxide and water performed using gas containing carbon dioxide with a CO$_2$ volume fraction of >30%, is used as a chemically reactive filter material.

2. Process according to claim 1, characterised in that pellets of limestone flour, hydrated lime and water are recarbonated.

**Revendications**

1. Procédé pour désacidifier et filtrer l'eau, avec des matériaux granuleux contenant plus de 97 % en poids de carbonate alcalino-terreux, caractérisé en ce qu' on utilise comme matériau filtrant, réagissant chimiquement, un matériau obtenu par recarbonation par un gaz contenant du dioxyde de carbone en une proportion en volume de CO$_2$ > 30 %, de grenailles constituées de carbonate alcalino-terreux, d'hydroxyde alcalino-terreux et d'eau.

2. procédé selon la revendication 1, caractérisé en ce que les grenailies, constituées de farine de pierre à chaux, d'hydrate de chaux et d'eau, sont recarbonatés.